# EUROPEAN PATENT SPECIFICATION

(11) **EP 3 862 100 B1**
(45) Date of publication and mention of the grant of the patent: **04.03.2026**
(21) Application number: 21166133.5
(22) Date of filing: 30.04.2019
(51) Int. Cl.: B05D 3/06, B05D 7/14, C23C 18/14, B05D 1/28, B05D 7/00

(54) **HOME APPLIANCE AND METHOD OF MANUFACTURING THE SAME**
HAUSHALTSGERÄT UND VERFAHREN ZUR HERSTELLUNG DAVON
APPAREIL DOMESTIQUE ET SON PROCÉDÉ DE FABRICATION

(30) Priority: 30.04.2018 KR 20180049990
(43) Date of publication of application: 11.08.2021
(62) Divisional of application: 19171879.0
(73) Proprietor: Samsung Electronics Co., Ltd., Suwon-si, Gyeonggi-do 16677 (KR)
(72) Inventor: Sung, Do Soo, 16677 Suwon-si, Gyeonggi-do (KR); Koh, Young Deog, 16677 Suwon-si, Gyeonggi-do (KR); Kim, Sung Wook, 16677 Suwon-si, Gyeonggi-do (KR); Kim, Yong Hwan, 16677 Suwon-si, Gyeonggi-do (KR); Kim, Choong Keon, 16677 Suwon-si, Gyeonggi-do (KR); Lee, Seok, 16677 Suwon-si, Gyeonggi-do (KR)
(74) Representative: Gulde & Partner

(56) References cited:
- EP-A1- 0 575 798
- EP-A1- 3 045 233
- EP-A2- 2 377 901
- WO-A1-2006/028027
- DE-A1- 102006 000 234
- FR-A1- 2 419 162
- US-A- 2 385 332
- US-A- 2 533 351
- US-A- 3 924 022
- US-A- 4 032 673
- US-A1- 2002 110 692
- US-A1- 2014 357 016

## Description

### BACKGROUND

### 1. Technical Field

The disclosure relates to a method of manufacturing a home appliance having an improved structure to provide anti-fingerprinting properties and a method of manufacturing the same.

### 2. Description of the Related Art

Generally, stainless steel is excellent in rigidity and corrosion resistance, and thus is often used as a material for forming an outer appearance of a home appliance such as a refrigerator and an oven.

Conventionally, the surface of stainless steel is coated with polyester and acrylic type paints in order to provide anti-fingerprinting properties to the surface of the stainless steel that forms the outer appearance of a home appliance. When polyester and acrylic type paints are used on the surface of stainless steel, it is required to be thermally dried to cure the paints. In the process of heat drying, the stainless steel may be yellowed by high temperature oxidation.

Also, conventionally, a complicated and long-time process is required to coat the surface of stainless steel. As an example, coil-type stainless steel is required to undergo a number of pretreatment, coating, and heat drying processes after the input of the coil-type stainless steel.

Recently, various stainless steel surface coating methods that may replace the conventional surface coating method of stainless steel have been actively studied.
US 3 924 022 A discloses a method of manufacturing of a coated steel sheet.

### SUMMARY

The present invention is directed to subject matter as defined in the claims.

The present invention is directed to a method of manufacturing a home appliance, the method comprising the steps of forming a first layer including silicon oxide on a surface of a steel sheet forming an outer appearance of the home appliance; forming a second layer by coating the first layer with an ultraviolet curing paint including an amino silane coupling agent; and curing the second layer by irradiating ultraviolet rays.

Preferably, the method of the invention further comprises the step of forming the first layer on the surface of the steel sheet by a flame treatment.

Preferably, the method of the invention further comprises the step of supplying a precursor for forming the first layer to the surface of the steel sheet, wherein the precursor includes a silane.

Preferably, in the method of the invention the formation of the first layer, the formation of the second layer, and the curing of the second layer are performed by a roll-to-roll method.

Preferably, the method of the invention further comprises the steps of supplying the ultraviolet curing paint to one point between a first transfer roll and a second transfer roll from a paint supply device; and coating the surface of the steel sheet with the ultraviolet curing paint supplied by a roll coater rotated by the contact with the second transfer roll.

Preferably, in the method of the invention the steel sheet includes stainless steel.

The home appliance which can be obtained by using the claimed method may have an improved structure to improve anti-fingerprinting and anti-scratch properties of an outer appearance thereof.

The home appliance which can be obtained by using the claimed method may have an outer appearance which is provided with a thin film coating layer.

Additional aspects of the disclosure will be set forth in part in the description which follows and, in part, will be obvious from the description, or may be learned by practice of the disclosure.

In accordance with an aspect of the disclosure, a home appliance which can be obtained by the claimed method may include a main body including an internal space, a door provided to open and close the internal space, and a coating layer formed on at least one of the main body and the door, wherein the coating layer includes a first layer provided to cover the surface of at least one of the main body and the door and including silicon oxide, and a second layer provided to cover the first layer with an ultraviolet curing paint including a silane coupling agent.

The main body and the door may be made of stainless steel.

A passive film layer may be formed on the surface of at least one of the main body and the door, and the first layer may be formed on the passive film layer.

The coating layer may have a thickness of 1µm or more and 2µm or less.

The silane coupling agent includes an amino silane coupling agent.

The ultraviolet curing paint may further include an oligomer, and the oligomer may include a urethane acrylate.

The oligomer may have a weight ratio (%) of 20 or more and 35 or less based on a weight ratio (%) of 100 of the ultraviolet curing paint.

The oligomer may include a 9-functional urethane acrylate having a weight ratio (%) of 10 or more and 15 or less based on a weight ratio (%) of 100 of the ultraviolet curing paint, a 6-functional urethane acrylate having a weight ratio (%) of 10 or more and 15 or less based on a weight ratio (%) of 100 of the ultraviolet curing paint, and a 2-functional urethane acrylate having a weight ratio (%) of 5 or less based on a weight ratio (%) of 100 of the ultraviolet curing paint.

The silane coupling agent may have a weight ratio (%) of 3 or less based on a weight ratio (%) of 100 of the ultraviolet curing paint.

The method of manufacturing the home appliance may further include forming the first layer on the surface of the steel sheet by a flame treatment.

The method of manufacturing the home appliance may further include supplying a precursor for forming the first layer to the surface of the steel sheet, wherein the precursor may include a silane.

The formation of the first layer, the formation of the second layer, and the curing of the second layer may be performed by a roll-to-roll method.

The method of manufacturing the home appliance may further include supplying the ultraviolet curing paint to one point between a first transfer roll and a second transfer roll from a paint supply device, and coating the surface of the steel sheet with the ultraviolet curing paint supplied by a roll coater rotated by the contact with the second transfer roll.

The steel sheet may include stainless steel.

The silane coupling agent includes an amino silane coupling agent.

The ultraviolet curing paint may further include an oligomer, and the oligomer may include a urethane acrylate.

The sum of the thickness of the first layer and the thickness of the second layer may be 1µm or more and 2µm or less.

The method of manufacturing the home appliance may further include curing the second layer by passing the steel sheet through a curing apparatus provided with an ultraviolet irradiator and an ultraviolet sensor.

The method of manufacturing the home appliance may further include receiving an ultraviolet target value required by a control panel of the curing apparatus to cure the second layer, measuring the amount of ultraviolet rays irradiated from the ultraviolet irradiator with the ultraviolet sensor, and comparing the ultraviolet target value and the amount of ultraviolet rays measured by the ultraviolet sensor and controlling the amount of ultraviolet rays irradiated from the ultraviolet irradiator by the control panel of the curing apparatus.

### BRIEF DESCRIPTION OF THE DRAWINGS

These and/or other aspects of the disclosure will become apparent and more readily appreciated from the following description of the embodiments, taken in conjunction with the accompanying drawings of which:
FIG. 1 is a first exemplary view of a home appliance according to an embodiment of the disclosure;
FIG. 2 is a second exemplary view of the home appliance according to an embodiment of the disclosure;
FIG. 3 is a view schematically illustrating a coating structure of the home appliance according to an embodiment of the disclosure;
FIG. 4 is an enlarged view of the coating structure of FIG. 3;
FIG. 5 is a table illustrating components of an ultraviolet curing paint in the home appliance according to an embodiment of the disclosure;
FIG. 6 is a table comparing adhesion and alkali resistance properties according to the type of a silane coupling agent in the home appliance according to an embodiment of the disclosure;
FIG. 7 is a table illustrating the adhesion properties, the alkali resistance properties, workability, and protective vinyl peelability when a coating layer including a first layer and a second layer is applied to the surface of an outer appearance of the home appliance according to an embodiment of the disclosure;
FIG. 8 is a schematic view illustrating a method of manufacturing the home appliance according to an embodiment of the disclosure;
FIG. 9 is a block diagram illustrating the method of manufacturing the home appliance according to an embodiment of the disclosure; and
FIG. 10 is a block diagram illustrating a method of controlling the amount of ultraviolet rays during a coating layer curing process in the method of manufacturing the home appliance according to an embodiment of the disclosure.

### DETAILED DESCRIPTION

Hereinafter, preferred embodiments of the disclosure will be described in detail with reference to the accompanying drawings. The terms "front end," "rear end," "upper portion," "lower portion," "upper end" and "lower end" used in the following description are defined with reference to the drawings, and the shape and position of each component are not limited by these terms.

A coating layer may be formed on the surface of an outer appearance of a home appliance to ensure anti-fingerprinting and anti-scratch properties. The home appliance may include a main body having an internal space and a door provided to open and close the internal space. The main body and the door may form the outer appearance of the home appliance. The coating layer may be formed on at least one of the main body and the door. Specifically, the coating layer may be formed on the surface of at least one of the main body and the door which are exposed to the outside. The home appliance may include a refrigerator, an oven, and the like, but the type thereof is not limited to the above example. Hereinafter, a refrigerator and an oven will be described as an example of a home appliance to which a coating layer is applied.

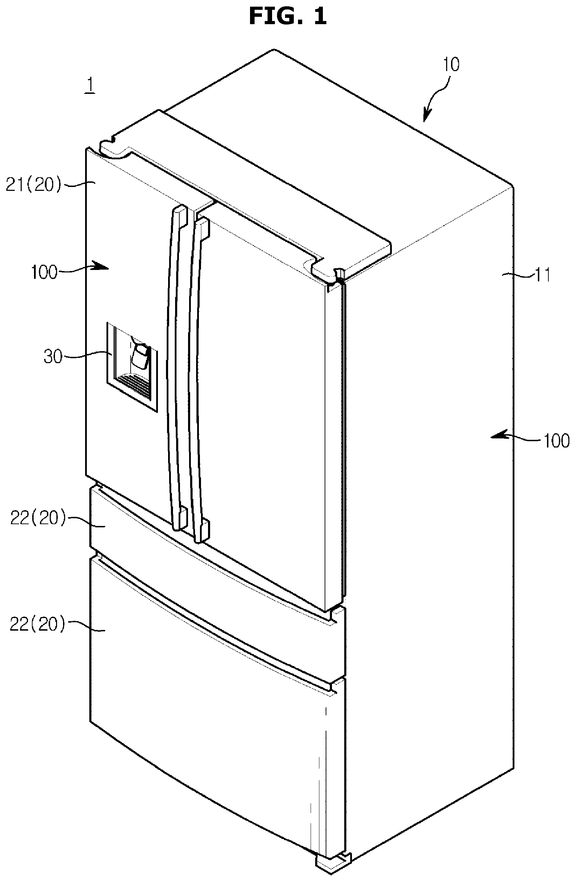

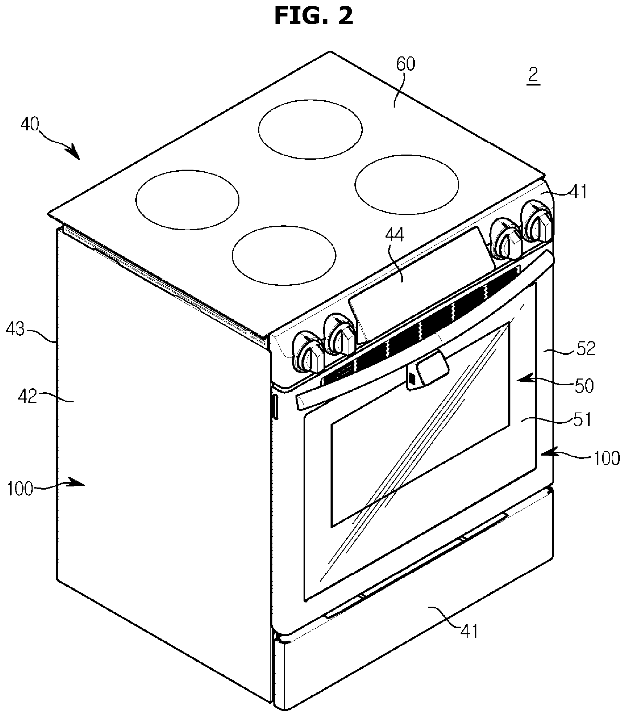

FIG. 1 is a first exemplary view of a home appliance according to an embodiment of the disclosure, and FIG. 2 is a second exemplary view of the home appliance according to an embodiment of the disclosure.

As illustrated in FIG. 1, a refrigerator 1 may include a main body 10, a storage room (not shown) formed inside of the main body 10, a door 20 provided to open and close the storage compartment, and a cool air supply apparatus provided to supply cool air to the storage room.

The cool air supply apparatus may include an evaporator, a compressor, a condenser, an expander, and the like so that evaporation and compression of refrigerant may be performed cyclically.

The main body 10 may include an inner case (not shown) forming the storage room, an outer case 11 coupled to the outside of the inner case, and an insulator (not shown) provided between the inner case and the outer case 11.

The inner case may be formed by being injection molded with a plastic material, and the outer case 11 may be formed of a metal material. As an example, the outer case 11 may be formed of stainless steel. A urethane foam insulator is used as the insulator, and a vacuum insulator may be used together as needed.

The door 20 may include a refrigerator door 21 provided to open and close a refrigerator compartment of the storage room and a freezer door 22 provided to open and close a freezer compartment of the storage room. As an example, the door 20 may be formed of stainless steel.

The refrigerator 1 may further include a dispenser 30 provided to be able to dispense water or ice to the outside of the main body 10. The dispenser 30 may be provided on the refrigerator door 21.

A coating layer 100 may be formed on at least one of the main body 10 and the door 20 of the refrigerator 1 to ensure anti-fingerprinting and anti-scratch properties. Specifically, the coating layer 100 may be formed on at least one of the outer case 11 and the door 20 which are exposed to the outside.

As illustrated in FIG. 2, an oven 2 may include a main body 40, a cooking chamber (not shown), a door 50 provided to open and close the cooking chamber, and a cooktop 60 provided at an upper end portion of the main body 40 to heat food to be cooked.

The main body 40 may include a front panel 41 forming a front surface of the main body 40, a side panel 42 forming side surfaces of the main body 40, and a rear panel 43 forming a rear surface of the main body 40. The front panel 41 may be provided with a display module 44 that displays information on various operations of the oven 2 and allows a user to input operation commands.

The door 50 may include a see-through portion 51 and a door frame 52 on which the see-through portion 51 is installed. The see-through portion 51 may be made of a transparent material such as glass so that the cooking process of the inside of the cooking chamber may be externally confirmed. The door frame 52 may be made of a metal material such as stainless steel to be capable of supporting the see-through portion 51.

The coating layer 100 may be formed on at least one of the main body 40 and the door 50 of the oven 2 to ensure the anti-fingerprinting and anti-scratch properties. Specifically, the coating layer 100 may be formed on the surface of at least one of the main body 40 and the door frame 52 which are exposed to the outside. Particularly, the coating layer 100 may be formed on the surface of at least one of the front panel 41, the side panel 42 and the door frame 52.

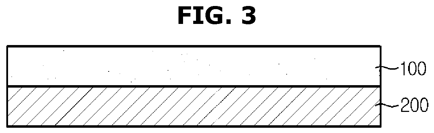

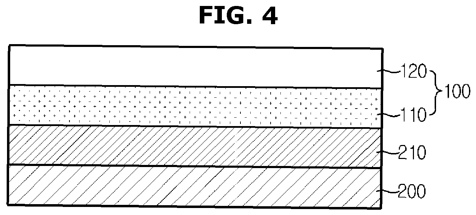

FIG. 3 is a view schematically illustrating a coating structure of the home appliance according to an embodiment of the disclosure, and FIG. 4 is an enlarged view of the coating structure of FIG. 3.

As illustrated in FIGS. 3 and 4, the coating layer 100 may be formed on a steel sheet 200 forming the outer appearance of a home appliance. The steel sheet 200 may be used to form at least one of the main body and the door of the home appliance. Particularly, the steel sheet 200 may include stainless steel. That is, the steel sheet 200 may be made of stainless steel.

The coating layer 100 may include a first layer 110 provided to cover the surface of the steel sheet 200 and a second layer 120 provided to cover the first layer 110. That is, the coating layer 100 may be laminated on the steel sheet 200 such that the first layer 110 is positioned between the steel sheet 200 and the second layer 120.

The first layer 110 of the coating layer 100 may include silicon oxide. Particularly, the first layer 110 of the coating layer 100 may include silicon dioxide (SiO₂).

The second layer 120 of the coating layer 100 may be formed by an ultraviolet curing paint. Specifically, the second layer 120 of the coating layer 100 may be formed by the ultraviolet curing paint including a silane coupling agent.

A passive film layer 210 may be formed on the surface of the steel sheet 200. Specifically, the passive film layer 210 may be formed on the surface of the steel sheet 200 that is exposed to the outside. The steel sheet 200 made of stainless steel may contain chromium (Cr). The passive film layer 210 may be formed in the form of a thin film on the surface of the steel sheet 200 by combining chromium (Cr) with oxygen in the air. The passive film layer 210 serves to prevent the surface of the steel sheet 200 from being corroded.

The coating layer 100 may be formed on the passive film layer 210. Specifically, the first layer 110 of the coating layer 100 may be formed on the passive film layer 210.

The coating layer 100 may have a thin film form. Particularly, the coating layer 100 may have a thickness of 3µm or less. More particularly, the coating layer 100 may have a thickness of 1µm or more and 2µm or less.

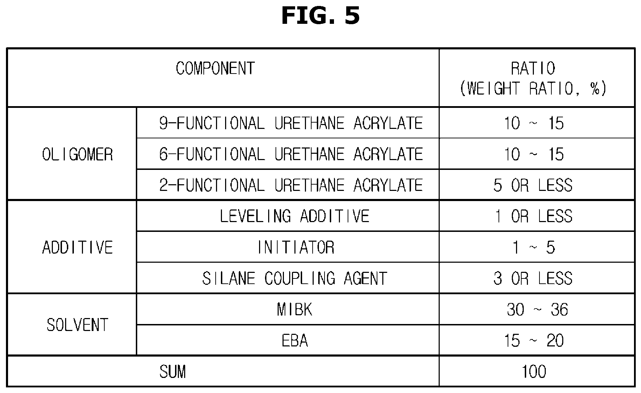

FIG. 5 is a table illustrating components of an ultraviolet curing paint in the home appliance according to an embodiment of the disclosure.

As may be seen from FIG. 5, the ultraviolet curing paint may include the silane coupling agent. Particularly, the silane coupling agent may have a weight ratio (%) of 3 or less based on a weight ratio (%) of 100 of the ultraviolet curing paint. The silane coupling agent includes an amino silane coupling agent.

The ultraviolet curing paint may further include an oligomer. The oligomer may have a weight ratio (%) of 20 or more and 35 or less based on a weight ratio (%) of 100 of the ultraviolet curing paint.

The oligomer may include at least one of a 9-functional urethane acrylate, a 6-functional urethane acrylate, and a 2-functional urethane acrylate. Particularly, the oligomer may include at least one of the 9-functional urethane acrylate having a weight ratio (%) of 10 or more and 15 or less based on a weight ratio (%) of 100 of the ultraviolet curing paint, the 6-functional urethane acrylate having a weight ratio (%) of 10 or more and 15 or less based on a weight ratio (%) of 100 of the ultraviolet curing paint, and the 2-functional urethane acrylate having a weight ratio (%) of 5 or less based on a weight ratio (%) of 100 of the ultraviolet curing paint.

The ultraviolet curing paint may further include an initiator and leveling additives. Particularly, the initiator may have a weight ratio (%) of 1 or more and 5 or less based on a weight ratio (%) of 100 of the ultraviolet curing paint. The leveling additives may have a weight ratio (%) of 1 or less based on a weight ratio (%) of 100 of the ultraviolet curing paint.

The ultraviolet curing paint may further include a solvent. The solvent may have a weight ratio (%) of 45 or more and 56 or less based on a weight ratio (%) of 100 of the ultraviolet curing paint. The solvent may include at least one of methyl isobutyl ketone (MIBK) and ethylene glycol butyl ether acetate (EBA). Particularly, the solvent may include the methyl isobutyl ketone having a weight ratio (%) of 30 or more and 36 or less based on a weight ratio (%) of 100 of the ultraviolet curing paint, and the ethylene glycol butyl ether acetate having a weight ratio (%) of 15 or more and 20 or less based on a weight ratio (%) of 100 of the ultraviolet curing paint.

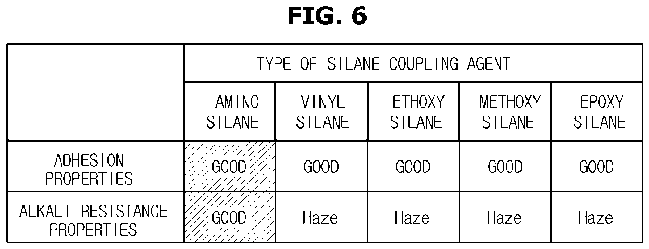

FIG. 6 is a table comparing adhesion and alkali resistance properties according to the type of a silane coupling agent in the home appliance according to an embodiment of the disclosure. In FIG. 6, "adhesion properties" indicate the degree of a coupling force or an adhesion force of the coating layer 100 to the steel sheet 200, and "alkali resistance properties" indicate whether or not the steel sheet 200 is discolored or deformed by a detergent. As an example, good alkali resistance properties mean that the steel sheet 200 and the coating layer 100 are firmly coupled, and thus the detergent does not discolor or deform the steel sheet 200.

As may be seen from FIG. 6, it is preferred that the silane coupling agent includes an amino silane coupling agent. As a result of testing and comparing the amino silane coupling agent, a vinyl silane coupling agent, an ethoxy silane coupling agent, a methoxy silane coupling agent, and the epoxy silane coupling agent, it was confirmed that when the amino silane coupling agent was used, both of the adhesion and alkali resistance properties were good.

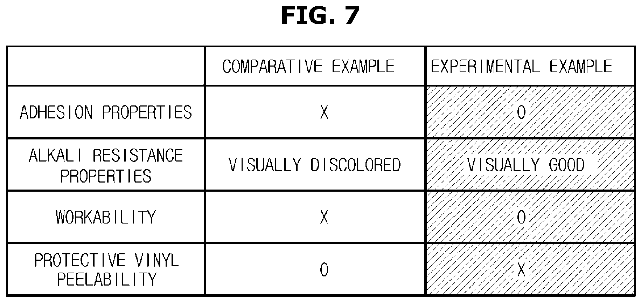

FIG. 7 is a table illustrating the adhesion properties, the alkali resistance properties, workability, and protective vinyl peelability when a coating layer including a first layer and a second layer is applied to the surface of an outer appearance of the home appliance according to an embodiment of the disclosure. In the table of FIG. 7, "comparative example" illustrates a case where a coating layer including only a second layer is applied to the surface of a steel sheet forming the outer appearance of the home appliance, and "experimental example" illustrates a case in which a coating layer including a first layer and a second layer is applied to the surface of a steel sheet forming the outer appearance of the home appliance. In FIG. 7, "adhesion properties" indicate the degree of a coupling force or an adhesion force of the coating layer 100 to the steel sheet 200, and the "workability" indicates whether or not the coating layer 100 is damaged or the coating layer 100 is separated from the steel sheet 200 when the steel sheet 200 having the coating layer 100 is bent. The "protective vinyl peelability" indicates whether or not the coating layer 100 is separated from the steel sheet 200 together with the protective vinyl when the protective vinyl attached on the coating layer 100 to protect the coating layer 100 is removed. Accordingly, having the "protective vinyl peelability" means that the coating layer 100 is separated from the steel sheet 200 together with the protective vinyl. The "alkali resistance properties" indicate whether or not the steel sheet 200 is discolored or deformed by a detergent. As an example, the good "alkali resistance properties" mean that the steel sheet 200 and the coating layer 100 are firmly coupled and thus the detergent does not discolor or deform the steel sheet 200.

As may be seen from FIG. 7, in the case of the "comparative example," although the adhesion properties are good, the alkali resistance properties, workability and protective vinyl peelability are insufficient. On the other hand, in the case of the "experimental example," not only the adhesion properties but also the alkali resistance properties, workability and protective vinyl peelability are all good. This is because, in the case of the "experimental example," the coupling force between the steel sheet 200 and the first layer 110 of the coating layer 100 is improved by the action of the silane coupling agent. That is, this is because, in the case of the "experimental example," the coupling force between the passive film layer 210 formed on the steel sheet 200 and the first layer 110 of the coating layer 100 is improved by the action of the silane coupling agent.

Hereinafter, a method of manufacturing a home appliance will be described in detail.

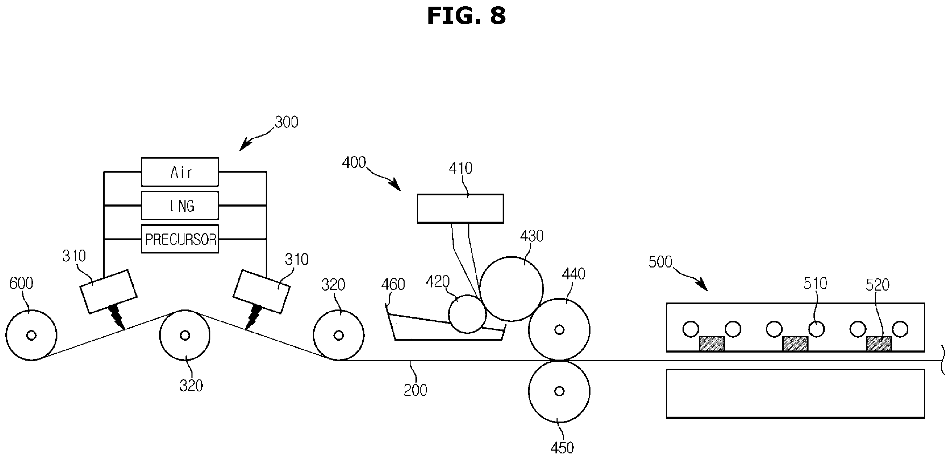

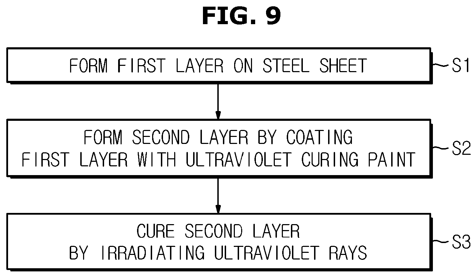

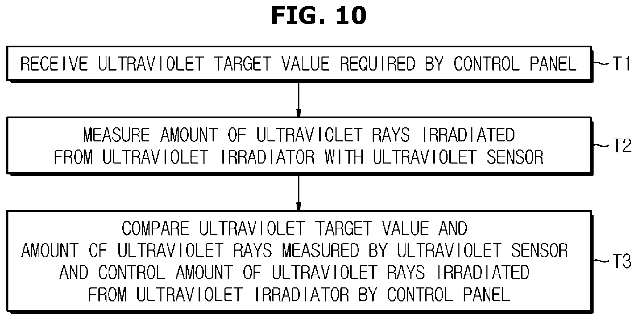

FIG. 8 is a schematic view illustrating a method of manufacturing the home appliance according to an embodiment of the disclosure, FIG. 9 is a block diagram illustrating the method of manufacturing the home appliance according to an embodiment of the disclosure, and FIG. 10 is a block diagram illustrating a method of controlling the amount of ultraviolet rays during a coating layer curing process in the method of manufacturing the home appliance according to an embodiment of the disclosure.

As illustrated in FIGS. 8 and 9, a method of manufacturing the home appliance may include forming the first layer 110 on the surface of the steel sheet 200 forming the outer appearance of the home appliance (S1), forming the second layer 120 by coating the first layer 110 with an ultraviolet curing paint (S2), and curing the second layer 120 by irradiating ultraviolet rays (S3). The formation of the first layer 110 on the surface of the steel sheet 200 may be referred to as a "pretreatment process," and the formation of the second layer 120 on the first layer 110 may be referred to as a "coating process." The curing of the second layer 120 may be referred to as a "curing process."

Each process will be described in detail below.

### Pretreatment process

The method of manufacturing the home appliance may include forming the first layer 110 including silicon oxide on the surface of the steel sheet 200 forming the outer appearance of the home appliance. Specifically, the method of manufacturing the home appliance may include forming the first layer 110 including silicon dioxide on the surface of the steel sheet 200 forming the outer appearance of the home appliance. As such, by forming the first layer 110 on the surface of the steel sheet 200, the surface energy of the steel sheet 200 may be increased to improve the adhesion force.

The method of manufacturing the home appliance may further include forming the first layer 110 by flame-treating the surface of the steel sheet 200. The flame treatment on the surface of the steel sheet 200 may be accomplished by at least one heating device 310. The at least one heating device 310 may include a burner, but the type of the at least one heating device 310 is not limited to the above example. As such, by flame-treating the surface of the steel sheet 200, oil and foreign matter may be removed from the surface of the steel sheet 200.

The method of manufacturing the home appliance may further include supplying air, gas, and a precursor to the surface of the steel sheet 200. As an example, the gas may include LNG. As an example, the precursor may include a silane of a silicon compound.

### Coating process

The method of manufacturing the home appliance may include forming the second layer 120 by coating the first layer 110 with an ultraviolet curing paint including a silane coupling agent.

The method of manufacturing the home appliance may further include supplying the ultraviolet curing paint from a paint supply device 410 to one point between a first transfer roll 420 and a second transfer roll 430, and coating the surface of the steel sheet 200 with the ultraviolet curing paint supplied by a roll coater 440 rotating in contact with the second transfer roll 430.

A portion of the ultraviolet curing paint supplied to the one point between the first transfer roll 420 and the second transfer roll 430 may be transferred to the surface of the steel sheet 200 by the roll coater 440 and used to coat the surface of the steel sheet 200. The remaining portion of the ultraviolet curing paint supplied to the one point between the first transfer roll 420 and the second transfer roll 430 may be collected in a paint collector 460. The ultraviolet curing paint collected in the paint collector 460 may be supplied again to the paint supply device 410 and used to coat the surface of the steel sheet 200, and thus the waste of ultraviolet curing paint may be reduced.

When the coating process is performed in the above-described manner, the coating layer 100 in the form of a thin film having a uniform thickness of 1µm or more and 2µm or less may be easily formed and consumption of the ultraviolet curing paint may be minimized.

### Curing process

The method of manufacturing the home appliance may include curing the second layer 120 by irradiating ultraviolet rays. The method of manufacturing the home appliance may further include curing the second layer 120 by passing the steel sheet 200 through a curing apparatus 500 provided with an ultraviolet irradiator 510 and an ultraviolet sensor 520. The amount of ultraviolet rays irradiated from the ultraviolet irradiator 510 may be automatically controlled by a control panel (not shown) of the curing apparatus 500. Hereinafter, a method of controlling the amount of ultraviolet rays during the curing process will be described in detail with reference to FIG. 10. However, the method of controlling the amount of the ultraviolet rays during the curing process is not limited to the following example, but may be variously changed.

As illustrated in FIG. 10, the method of manufacturing the home appliance may further include receiving an ultraviolet target value required by the control panel of the curing apparatus 500 to cure the second layer 120 of the coating layer 100 (T1).

The method of manufacturing the home appliance may further include measuring the amount of ultraviolet rays irradiated from the ultraviolet irradiator 510 with the ultraviolet sensor 520 (T2).

The method of manufacturing the home appliance may further include comparing the ultraviolet target value and the amount of ultraviolet rays measured by the ultraviolet sensor 520 and controlling the amount of ultraviolet rays irradiated from the ultraviolet irradiator 510 by the control panel of the curing apparatus 500 (T3).

Particularly, the curing apparatus 500 may be provided with a plurality of the ultraviolet irradiators 510 and a plurality of the ultraviolet sensors 520. The plurality of ultraviolet irradiators 510 and the plurality of ultraviolet sensors 520 may be installed to be adjacent to each other.

The ultraviolet irradiator 510 may include an ultraviolet lamp. However, it is sufficient if the ultraviolet irradiator 510 may irradiate ultraviolet rays, and the type thereof is not limited to the ultraviolet lamp.

As illustrated in FIG. 8, the process of forming the coating layer 100 on the surface of the steel sheet 200 may be performed by a roll-to-roll method. That is, the process of forming the first layer 110, the process of forming the second layer 120, and the process of curing the second layer 120 may be performed by the roll-to-roll method. In other words, the pretreatment process, the coating process, and the curing process may be all performed by the roll-to-roll method.

The steel sheet 200 may be transferred to a pretreatment apparatus 300 for forming the first layer 110 of the coating layer 100 by a feeding roller 600. Air, gas, and a precursor for forming the first layer 110 may be supplied to the steel sheet 200 in the pretreatment apparatus 300. Also, the steel sheet 200 may be flame treated by the at least one heating device 310 in the pretreatment apparatus 300. The steel sheet 200 transferred to the pretreatment apparatus 300 may be cooled by at least one cooling roller 320 and be simultaneously transferred to the coating apparatus 400. The steel sheet 200 transferred to the coating apparatus 400 may be coated with the ultraviolet curing paint while passing between the roll coater 440 and a guide roller 450 rotated by the contact with the roll coater 440. That is, the second layer 120 may be formed on the first layer 110 while the steel sheet 200 passes between the roll coater 440 and the guide roller 450. The steel sheet 200 transferred to the coating apparatus 400 may be transferred to the curing apparatus 500 by at least one transfer roller (not shown). The second layer 120 of the coating layer 100 may be cured by ultraviolet rays while passing through the curing apparatus 500. The steel sheet 200 passing through the curing apparatus 500 may be collected by a collection roller (not shown).

A simple process line may be constructed by forming the coating layer 100 on the surface of the steel sheet 200 by the roll-to-roll method as described above.

As is apparent from the above, anti-fingerprinting and anti-scratch properties of an outer appearance of a home appliance can be improved by forming a coating layer, which is implemented by chemical bonding of silicon oxide and a silane coupling agent, on the surface of at least one of a main body and a door of the home appliance.

Also, a uniform coating layer of a thin film can be formed on the surface of a steel sheet by applying a roll-to-roll method to the entire process of forming a coating layer on the surface of the steel sheet forming an outer appearance of a home appliance.

The embodiments disclosed with reference to the accompanying drawings have been described above. However, it will be understood by those skilled in the art that various changes in form and details may be made therein without departing from the scope of the invention as defined by the appended claims.

## Claims

1. A method of manufacturing a home appliance comprising:
forming a first layer including silicon oxide on a surface of a steel sheet forming an outer appearance of the home appliance;
forming a second layer by coating the first layer with an ultraviolet curing paint including an amino silane coupling agent; and
curing the second layer by irradiating ultraviolet rays.

2. The method of manufacturing the home appliance according to anyone of the preceding claims, further comprising:
forming the first layer on the surface of the steel sheet by a flame treatment.

3. The method of manufacturing the home appliance according to anyone of the preceding claims, further comprising:
supplying a precursor for forming the first layer to the surface of the steel sheet,
wherein the precursor includes a silane.

4. The method of manufacturing the home appliance according to anyone of the preceding claims, wherein
the formation of the first layer, the formation of the second layer, and the curing of the second layer are performed by a roll-to-roll method.

5. The method of manufacturing the home appliance according to anyone of the preceding claims, further comprising:
supplying the ultraviolet curing paint to one point between a first transfer roll and a second transfer roll from a paint supply device; and
coating the surface of the steel sheet with the ultraviolet curing paint supplied by a roll coater rotated by the contact with the second transfer roll.

6. The method of manufacturing the home appliance according to anyone of the preceding claims, wherein
the steel sheet includes stainless steel.

## Patentansprüche

1. Verfahren zur Herstellung eines Haushaltsgeräts, umfassend:
Bilden einer ersten Schicht, die Siliziumoxid enthält, auf einer Oberfläche eines Stahlblechs, das das äußere Erscheinungsbild des Haushaltsgeräts bildet;
Bilden einer zweiten Schicht durch Beschichten der ersten Schicht mit einer UV-härtenden Farbe, die einen Amino-Silan-Haftvermittler enthält; und
Aushärten der zweiten Schicht durch Bestrahlen mit UV-Strahlen.

2. Verfahren zur Herstellung des Haushaltsgeräts nach einem der vorstehenden Ansprüche, umfassend ferner:
Bilden der ersten Schicht auf der Oberfläche des Stahlblechs durch eine Flammbehandlung.

3. Verfahren zur Herstellung des Haushaltsgeräts nach einem der vorstehenden Ansprüche, umfassend ferner:
Zuführen eines Vorläufers zum Bilden der ersten Schicht auf die Oberfläche des Stahlblechs,
wobei der Vorläufer ein Silan enthält.

4. Verfahren zur Herstellung des Haushaltsgeräts nach einem der vorstehenden Ansprüche, wobei
die Bildung der ersten Schicht, die Bildung der zweiten Schicht und die Aushärtung der zweiten Schicht durch ein Roll-to-Roll-Verfahren durchgeführt werden.

5. Verfahren zur Herstellung des Haushaltsgeräts nach einem der vorstehenden Ansprüche, umfassend ferner:
Zuführen der UV-härtenden Farbe aus einer Farbzuführvorrichtung an einen Punkt zwischen einer ersten Übertragungswalze und einer zweiten Übertragungswalze; und
Beschichten der Oberfläche des Stahlblechs mit der UV-härtenden Farbe, die von einem Walzenbeschichter zugeführt wird, der durch den Kontakt mit der zweiten Übertragungswalze gedreht wird.

6. Verfahren zur Herstellung des Haushaltsgeräts nach einem der vorstehenden Ansprüche, wobei
das Stahlblech Edelstahl umfasst.

## Revendications

1. Procédé de fabrication d'un appareil ménager consistant à :
former une première couche comportant de l'oxyde de silicium sur une surface d'une tôle acier formant une apparence extérieure de l'appareil ménager ;
former une seconde couche en enduisant la première couche d'une peinture à durcissement ultraviolet comprenant un agent de couplage d'amino - silane ; et
durcir la seconde couche en irradiant des rayons ultraviolets.

2. Procédé de fabrication de l'appareil ménager selon l'une quelconque des revendications précédentes, consistant en outre à :
former la première couche sur la surface de la tôle acier par un traitement à la flamme.

3. Procédé de fabrication de l'appareil ménager selon l'une quelconque des revendications précédentes, consistant en outre à :
fournir un précurseur pour former la première couche à la surface de la tôle acier,
dans lequel le précurseur comporte un silane.

4. Procédé de fabrication de l'appareil ménager selon l'une quelconque des revendications précédentes, dans lequel
La formation de la première couche, la formation de la seconde couche, et le durcissement de la seconde couche sont effectuées par un procédé rouleau - à - rouleau.

5. Procédé de fabrication de l'appareil ménager selon l'une quelconque des revendications précédentes, consistant en outre à :
fournir la peinture à durcissement ultraviolet à un point entre un premier rouleau de transfert et un second rouleau de transfert à partir d'un dispositif d'alimentation en peinture ; et
enduire la surface de la tôle acier de la peinture à durcissement ultraviolet fournie par un rouleau d'enduction tourné par contact avec le second rouleau de transfert.

6. Procédé de fabrication de l'appareil ménager selon l'une quelconque des revendications précédentes, dans lequel
la tôle acier comporte un acier inoxydable.
